(19) Europäisches Patentamt
European Patent Office
Office européen des brevets

(11) Veröffentlichungsnummer: **0 180 879**
**A1**

(12) # EUROPÄISCHE PATENTANMELDUNG

(21) Anmeldenummer: **85113660.6**

(22) Anmeldetag: **26.10.85**

(51) Int. Cl.⁴: **C 07 F 9/65**
A 01 N 57/16

(30) Priorität: **09.11.84 DE 3440913**

(43) Veröffentlichungstag der Anmeldung:
**14.05.86 Patentblatt 86/20**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Maurer, Fritz, Dr.**
**Roeberstrasse 8**
**D-5600 Wuppertal 1(DE)**

(72) Erfinder: **Homeyer, Bernhard, Dr.**
**Obere Strasse 28**
**D-5090 Leverkusen 3(DE)**

(54) **Triazolyl-thionophosphorsäureester.**

(57) Die Erfindung betrifft neue Triazol-3-yl-thionophosphorsäureester der Formel (I)

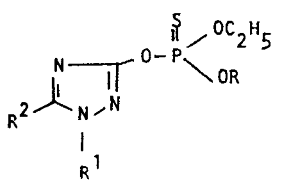

(I)

in welcher
R für i-Propyl oder sec.-Butyl steht,
$R^1$ für Alkyl oder Aryl steht und,
$R^2$ für Halogen steht,
welche als Schädlingsbekämpfungsmittel verwendet werden können.

EP 0 180 879 A1

BAYER AKTIENGESELLSCHAFT 5090 Leverkusen, Bayerwerk

Konzernverwaltung RP S/by-c
Patentabteilung Ia

## Triazolyl-thionophosphorsäureester

Die Erfindung betrifft neue Triazol-3-yl-thionophosphorsäureester, ein Verfahren zu ihrer Herstellung und ihre Verwendung in Schädlingsbekämpfungsmitteln, insbesondere als Insektizide und Nematizide.

Es ist bereits bekannt, daß bestimmte Thionophosphorsäureester, wie z.B. O,O-Diethyl-O-(5-chlor-1-i-propyl-1,2,4-triazol-3-yl)-thionophosphorsäureester insektizid wirksam sind (vgl. DE-AS 2 260 015).

Die Wirkungsdauer dieser Verbindungen ist jedoch nicht immer voll zufriedenstellend.

Es wurden nun neue Triazol-3-yl-thionophosphorsäureester der Formel (I) gefunden,

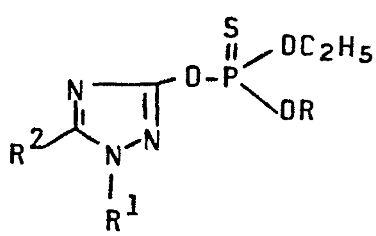

(I)

in welcher

R für i-Propyl oder sec.-Butyl steht,

$R^1$ für Alkyl oder Aryl steht und

$R^2$ für Halogen steht.

Weiterhin wurde gefunden, daß man die neuen Triazol-3-yl-thionophosphorsäureester der Formel (I) erhält, wenn man 3-Hydroxytriazole der Formel (II)

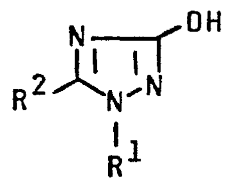

(II)

in welcher

$R^1$ und $R^2$ die oben angegebenen Bedeutungen haben,

oder die entsprechenden Alkalimetall-, Erdalkalimetall- oder Ammoniumsalze mit Halogeniden der Formel (III),

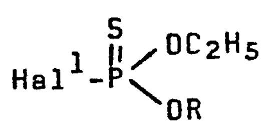

(III)

in welcher

R die oben angegebene Bedeutung hat und

$Hal^1$ für Halogen, wie Chlor oder Brom steht,

gegebenenfalls in Gegenwart eines Säureakzeptors und gegebenenfalls in Gegenwart eines Verdünnungsmittels umsetzt.

Die neuen Triazol-3-yl-thionophosphorsäureester der Formel (I) zeichnen sich in überragender Weise durch eine besonders hohe und lange Wirksamkeit als Schädlingsbekämpfungsmittel, insbesondere als Insektizide und Nematizide aus.

Die Erfindung betrifft vorzugsweise Verbindungen der Formel (I), in welcher

R für i-Propyl oder sec.-Butyl steht,

$R^1$ für Alkyl mit 1 bis 6 Atomen oder Aryl mit 6 bis 10 Atomen steht und

$R^2$ für Halogen, vorzugsweise Chlor oder Brom steht.

Besonders bevorzugt sind die Verbindungen der Formel (I), in welcher

R für i-Propyl oder sec.-Butyl steht,

$R^1$ für Alkyl mit 1 bis 4 Kohlenstoffatomen (wie insbesondere Methyl, Ethyl, n-Propyl, i-Propyl, n-Butyl, i-Butyl, sec.-Butyl und tert.-Butyl) oder für Aryl mit 6 Kohlenstoffatomen, wie insbesondere Phenyl steht und

$R^2$ für Chlor oder Brom, vorzugsweise Chlor steht.

Ganz besonders bevorzugt sind die Verbindungen der Formel (I), in welcher

R für i-Propyl oder sec.-Butyl, vorzugsweise für i-Propyl steht,

$R^1$ für i-Propyl, tert.-Butyl oder Phenyl, vorzugsweise für i-Propyl steht und

$R^2$ für Chlor steht.

Verwendet man beispielsweise für das erfindungsgemäße Verfahren O-Ethyl-O-i-propyl-thionophosphorsäurediesterchlorid und 5-Chlor-3-hydroxy-1-i-propyl-1,2,4-triazol als Ausgangsstoffe, so kann die entsprechende Reaktion durch das folgende Formelschema skizziert werden:

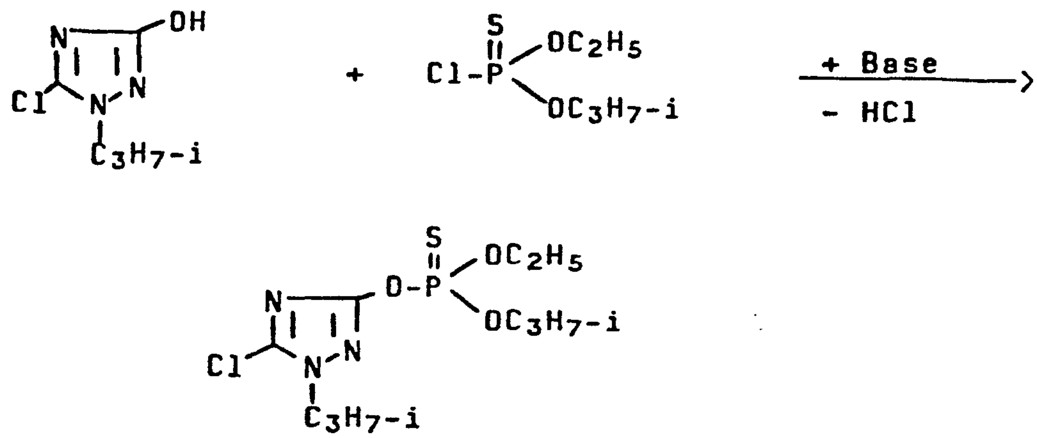


Die beim erfindungsgemäßen Verfahren als Ausgangsstoffe für die Herstellung der neuen Verbindungen der Formel (I) einzusetzenden 3-Hydroxy-1,2,4-triazole bzw. die entsprechenden Alkalimetall-, Erdalkalimetall- oder Ammoniumsalze sind durch die Formel (II) definiert. In dieser Formel stehen $R^1$ und $R^2$ für diejenigen Reste, welche oben bei der Definition in Formel (I) angegeben sind. Als Alkali- oder Erdalkalimetallsalze werden vorzugsweise die Natrium-, Kalium- oder Calciumsalze und als Ammoniumsalze vorzugsweise die Ammonium- oder Tri(nieder)Alkylammoniumsalze, wie Trimethylammonium- oder Triethylammoniumsalze eingesetzt.

Die Verbindungen der Formel (II) sind bekannt und/oder können nach allgemein bekannten Verfahren und Methoden hergestellt werden (vgl. z.B. DE-AS 2 260 015).

Als Beispiele für die Verbindungen der Formel (II) seien genannt:

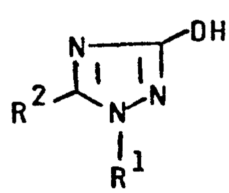

(II)

Tabelle 1

| $R^1$ | $R^2$ | $R^1$ | $R^2$ |
|---|---|---|---|
| $CH_3$ | Cl | $CH_3$ | Br |
| $C_2H_5$ | Cl | $C_2H_5$ | Br |
| $C_3H_7$-n | Cl | $C_3H_7$-n | Br |
| $C_3H_7$-i | Cl | $C_3H_7$-i | Br |
| $C_4H_9$-n | Cl | $C_4H_9$-n | Br |
| $C_4H_9$-i | Cl | $C_4H_9$-i | Br |
| $C_4H_9$-sec. | Cl | $C_4H_9$-sec. | Br |
| $C_4H_9$-tert. | Cl | $C_4H_9$-tert. | Br |
| 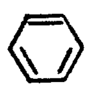 | Cl | 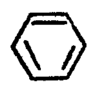 | Br |

Die außerdem als Ausgangsstoffe einzusetzenden Halogenide sind durch die Formel (III) definiert. In dieser Formel steht R für diejenigen Reste welche bei der Definition in Formel (I) angegeben sind. $Hal^1$ steht in dieser Formel für Halogen, wie insbesondere Chlor oder Brom.

Die Verbindungen der Formel (III) sind bekannt.

Als Beispiele für die Halogenide der Formel (III) seien genannt:
O-Ethyl-O-i-propyl- und O-Ethyl-O-sec.-butyl-thionophosphorsäureester-chlorid bzw. -bromid.

Das erfindungsgemäße Verfahren zur Herstellung der neuen Triazol-3-yl-thionophosphorsäureester der Formel (I) wird bevorzugt unter Verwendung von Verdünnungsmitteln durchgeführt. Als Verdünnungsmittel kommen praktisch alle inerten organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol, o-Dichlorbenzol, Ether wie Diethyl- und Dibutylether, Glykoldimethylether und Diglykoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile, wie z.B. Acetonitril und Propionitril, Amide, wie z.B.

Dimethylformamid, Diemthylacetamid und N-Methylpyrrolidon, sowie Dimethylsulfoxid, Tetramethylensulfon und Hexamethylphosphorsäuretriamid.

Das Verfahren kann gegebenenfalls in Gegenwart von Säureakzeptoren durchgeführt werden. Als Säureakzeptoren können alle üblichen Säurebindemittel Verwendung finden. Besonders bewährt haben sich Alkalicarbonate, wie Natrium- und Kaliumcarbonat, Alkalihydride, wie Natriumhydrid, ferner aliphatische, aromatische oder heterocyclische Amine, beispielsweise Triethylamin, Trimethylamin, Dimethylanilin, Dimethylbenzylamin und Pyridin.

Das erfindungsgemäße Verfahren wird im allgemeinen bei Temperaturen zwischen 0°C und 100°C durchgeführt. Bevorzugt wird der Bereich zwischen 20°C und 80°C. Die Umsetzungen werden im allgemeinen bei Normaldruck durchgeführt.

Zur Durchführung des erfindungsgemäßen Verfahrens werden die Ausgangsstoffe gewöhnlich annähernd in äquimolaren Mengen eingesetzt. Ein Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Danach gibt man ein organisches Lösungsmittel, z.B. Toluol zu und arbeitet die organische Phase wie üblich durch Waschen, Trocknen und Abdestillieren des Lösungsmittels auf.

Die neuen Verbindungen fallen in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella

germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella

maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe der Formel (I) zeichnen sich durch eine hervorragende insektizide und nematizide

Wirksamkeit aus. Sie eignen sich besonders gut für einen Einsatz zur langanhaltenden Bekämpfung von Bodeninsekten wie z.B. Diabrotica balteata und Phorbia antiqua, Blattläusen wie z.B. Myzus persicae und Nematoden wie z.B. Meloidogyne incognita. Eine langanhaltende Wirkungsdauer ist für die Bekämpfung von Bodenschädlingen von einer sehr großen praktischen Bedeutung.

Die Wirkstoffe können hierzu direkt in oder auf den Boden appliziert werden. Ebenso können auch Pflanzenteile, welche sich im Boden befinden oder welche in den Boden gebracht werden mit den Wirkstoffen bzw. den Schädlingsbekämpfungsmitteln, welche die Wirkstoffe enthalten, behandelt werden. So kann z.B. sehr vorteilhaft Saatgut beispielsweise durch Beizung oder Inkrustation geschützt werden.

Die erfindungsgemäßen Verbindungen können weiterhin bei der Bekämpfung von Hygiene- und Vorratsschädlingen eingesetzt werden.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage:

z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge

zeichnen sich die Wirkstoffe durch eine hervorragende Residualwirkung auf Holz und Ton sowie durch eine gute Alkalistabilität auf gekälkten Unterlagen aus.

Beispiel A

Wirkungsdauer-Test / Bodeninsekten

Testinsekt: Phorbia antiqua-Maden

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 5 l Töpfe und läßt diese bei 20°C stehen.

Im Abstand von 2 Wochen werden nach vorheriger erneuter Durchmischung Bodenproben von 250 ccm entnommen und in den behandelten Boden die entsprechenden Testinsekten gesetzt. Nach weiteren 2 bis 7 Tagen wird der Wirkungsgrad des Wirkstoffes durch Auszählen der toten und lebenden Testinsekten in % bestimmt. Der Wirkungsgrad ist 100 %, wenn alle Testinsekten abgetötet worden sind,

er ist 0 %, wenn noch genau so viele Testinsekten leben wie in der unbehandelten Kontrolle.

Der vergleichende Test ergab beispielsweise bei einer Wirkstoffkonzentration von 2,5 ppm, das folgende Ergebnis:

Tabelle A

Wirkungsdauer/Bodeninsekten
Phorbia antiqua-Maden im Boden

| Wirkstoff | Abtötungsgrade in % bei Wirkstoffkonzentration in ppm n. Wochen/ 2,5 ppm | | | | |
|---|---|---|---|---|---|
| | 2 | 4 | 6 | 8 | 10 Wochen |
| 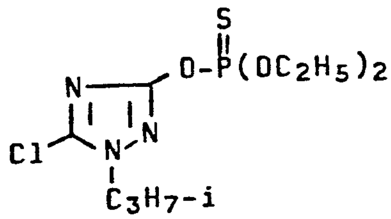 (A) (bekannt, vgl. DE-A 2 260 015) | 100 | 100 | 100 | 50 | 0 |
| 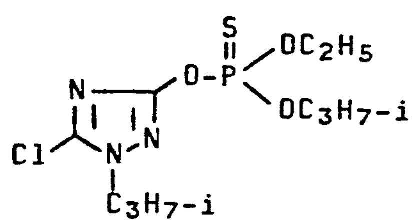 (1) | 100 | 100 | 100 | 100 | 100 |

Beispiel B

Wirkungsdauer-Test / Bodeninsekten

Testinsekt: Diabrotica-balteata Larven

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 5 l Töpfe und läßt diese bei 20°C stehen.

Im Abstand von 2 Wochen werden nach vorheriger erneuter Durchmischung Bodenproben von 250 ccm entnommen und in den behandelten Boden die entsprechenden Testinsekten gesetzt. Nach weiteren 7 Tagen wird der Wirkungsgrad des Wirkstoffes durch Auszählen der toten und lebenden Testinsekten in % bestimmt. Der Wirkungsgrad ist 100 %, wenn alle Testinsekten abgetötet worden sind,

er ist 0 %, wenn noch genau so viele Testinsekten leben wie in der unbehandelten Kontrolle.

Der vergleichende Test ergab, beispielsweise bei einer Wirkstoffkonzentration von 2,5 ppm, das folgende Ergebnis:

Tabelle B

Wirkungsdauer/Bodeninsekten

Diabrotica balteata Larven im Boden

| Wirkstoff | Abtötungsgrad in % bei Wirkstoffkonzentration in ppm n. Wochen/ 2,5 ppm | | | | |
|---|---|---|---|---|---|
| | 2 | 4 | 6 | 8 | 10 Wochen |
| 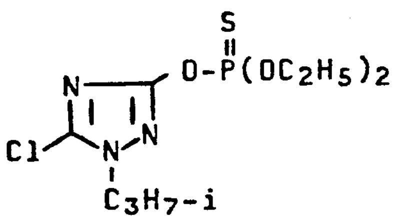 (A) (bekannt, vgl. DE-A-22 60 015) | 100 | 100 | 100 | 0 | 0 |
| 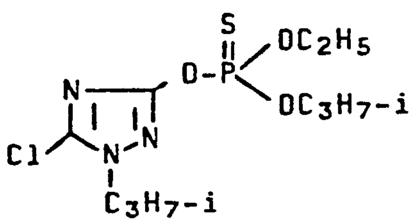 (1) | 100 | 100 | 100 | 100 | 100 |

Beispiel C

Wirkungsdauer-Test / Wurzelsystemische Wirkung

Testinsekt: Myzus persicae
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt mit 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in 3 Liter Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden in wöchentlichem Abstand die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testtiere leben wie bei der unbehandelten Kontrolle.

Der vergleichende Test ergab, beispielsweise bei einer Wirkstoffkonzentration von 10 ppm, das folgende Ergebnis:

Tabelle C

Wirkungsdauer/Blattläuse
*Myzus persicae*

| Wirkstoff | Abtötungsgrad in % bei Wirkstoffkonzentration in ppm n. Wochen 10 ppm | | | | |
|---|---|---|---|---|---|
| | 2 | 4 | 6 | 8 | 10 Wochen |
| 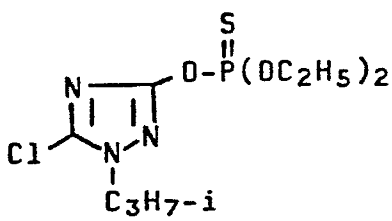 (A) (bekannt; vgl. DE-A 2 260 015) | 100 | 100 | 95 | 80 | 50 |
| 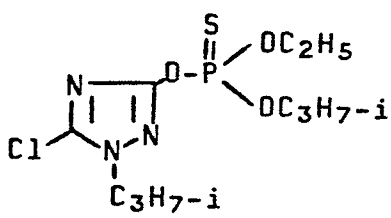 (1) | 100 | 100 | 100 | 100 | 100 |

Beispiel D

Wirkungsdauer-Test/Nematoden

Testnematoden: Meloidogyne incognita
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 5 l Töpfe und läßt diese bei 20°C stehen.

Im Abstand von 2 Wochen werden nach vorheriger erneuter Durchmischung Bodenproben von 375 ccm entnommen, dem behandelten Boden 125 ccm stark verseuchter Nematodenerde (Meloidogyne) zugemischt und diese Töpfe bei einer Gewächshaustemperatur von 25/18°C kultiviert mit Salat.

Nach drei Wochen werden die Wurzeln auf Nematodenbefall (Wurzelgallen) untersucht und der Wirkungsgrad des Wirkstoffes in % bestimmt. Der Wirkungsgrad ist 100 %, wenn der Befall vollständig vermieden wird, er ist 0 %, wenn der Befall genau so hoch ist wie bei den Kontrollpflanzen in unbehandelten, aber in gleicher Weise verseuchtem Boden.

Der vergleichende Test ergab, beispielsweise bei einer Wirkstoffkonzentration von 2,5 ppm, das folgende Ergebnis:

Tabelle D

Wirkungsdauer/Nemathoden
Meloidogyne incognita

| Wirkstoff | Abtötungsgrade in % bei Wirkstoffkonzentration in ppm n. Wochen 2,5 ppm | | | |
|---|---|---|---|---|
| | 2 | 4 | 6 | 8 Wochen |
| 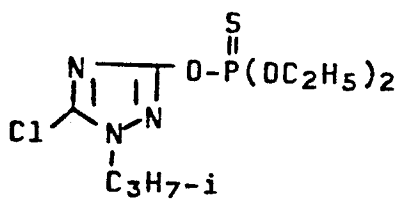<br>(A) (bekannt; vgl. DE-A 2 260 015) | 100 | 75 | 0 | 0 |
| 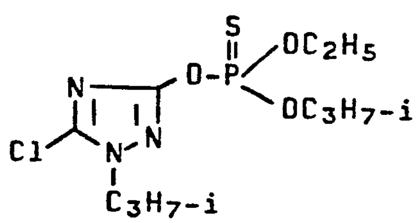<br>(1) | 100 | 100 | 100 | 75 |

Herstellungsbeispiele

Beispiel 1

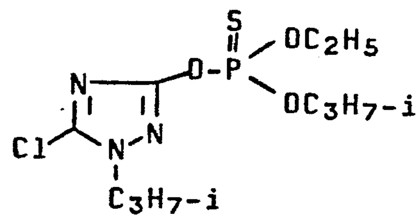

Eine Mischung aus 4,9 g (0,03 Mol) 5-Chlor-3-hydroxy-1-i-propyl-1,2,4-triazol, 6,2 g (0,045 Mol) Kaliumcarbonat, 6,1 g (0,03 Mol) O-Ethyl-O-i-propyl-thionophosphorsäurediesterchlorid und 50 ml Acetonitril wird 18 Stunden bei 20°C bis 25°C gerührt. Nach Zugabe von 300 ml Toluol wird zweimal mit jeweils 100 ml Wasser gewaschen, die organische Phase über Natriumsulfat getrocknet und das Lösungsmittel im Vakuum abdestilliert. Der Rückstand wird bei 70°C im Hochvakuum andestilliert.

Man erhält 7,2 g (74 % der Theorie) O-Ethyl-O-i-propyl-O-(5-chlor-1-i-propyl-1,2,4-triazol-3-yl)-thionophosphorsäureester in Form eines farblosen Öles mit einem Brechungsindex $n_D^{21}$ : 1,4829.

Analog Beispiel 1 können z.B. die folgenden Verbindungen der Formel (I)

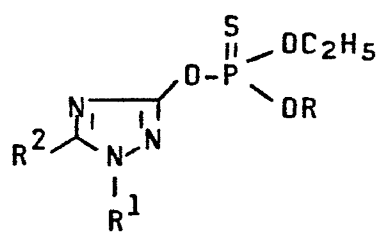

(I)

hergestellt werden:

| Beisp.-Nr. | R | $R^1$ | $R^2$ | Brechungs-index |
|---|---|---|---|---|
| 2 | sec.-$C_4H_9$ | i-$C_3H_7$ | Cl | $n_D^{23}$: 1,4833 |
| 3 | i-$C_3H_7$ | tert.-$C_4H_9$ | Cl | |
| 4 | i-$C_3H_7$ | 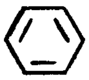 | Cl | |

Patentansprüche

1. Triazol-3-yl-thionophosphorsäureester der Formel (I)

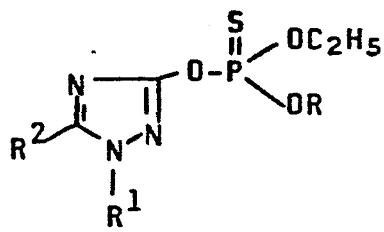

(I)

in welcher

R für i-Propyl oder sec.-Butyl steht,

$R^1$ für Alkyl oder Aryl steht und

$R^2$ für Halogen steht.

2. Verbindungen gemäß Formel (I) aus Anspruch 1, in welcher

R für i-Propyl oder sec.-Butyl steht,

$R^1$ für Alkyl mit 1 bis 6 Atomen oder Aryl mit 6 bis 10 Atomen steht und

$R^2$ für Halogen steht.

3. Verbindungen der Formel (I) gemäß Anspruch 1, in welcher

R für i-Propyl oder sec.-Butyl steht,

$R^1$ für Alkyl mit 1 bis 4 Kohlenstoffatomen oder für Phenyl steht und

$R^2$ für Chlor oder Brom steht.

4. Verbindung der Formel

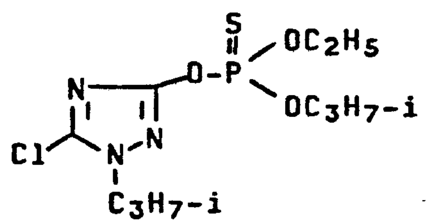

5. Verbindung der Formel

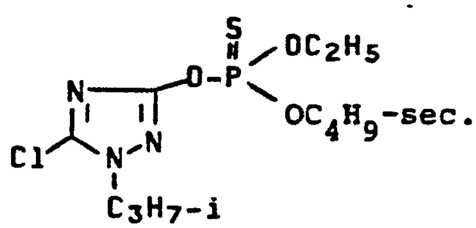

6. Verfahren zur Herstellung von Verbindungen der Formel (I)

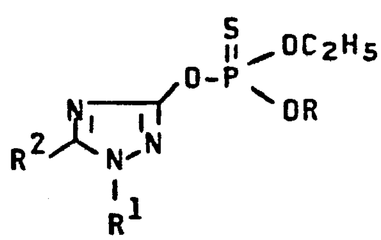

(I)

in welcher

R für i-Propyl oder sec.-Butyl steht,

$R^1$ für Alkyl oder Aryl steht und

$R^2$ für Halogen steht,

dadurch gekennzeichnet, daß man 3-Hydroxytriazole der Formel (II)

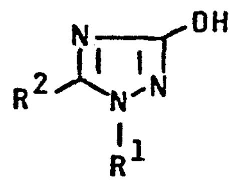

(II)

in welcher

$R^1$ und $R^2$ die oben angegebenen Bedeutungen haben,

oder die entsprechenden Alkalimetall-, Erdalkalimetall- oder Ammoniumsalze mit Halogeniden der Formel (III),

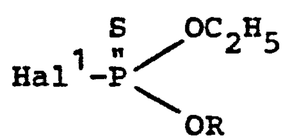

(III)

in welcher

R die oben angegebene Bedeutung hat und

$Hal^1$ für Halogen, wie Chlor oder Brom steht,

gegebenenfalls in Gegenwart eines Säureakzeptors und gegebenenfalls in Gegenwart eines Verdünnungsmittels umsetzt.

7. Schädlingsbekämpfungsmittel, gekennzeichnet durch einen Gehalt an mindestens einer Verbindung der Formel (I) gemäß Anspruch 1 oder 6.

8. Verwendung von Verbindungen der Formel (I) gemäß Anspruch 1 oder 6 zur Bekämpfung von Schädlingen, insbesondere von Insekten und Nematoden, vorzugsweise von Bodeninsekten und Nematoden.

9. Verfahren zur Bekämpfung von Schädlingen, dadurch gekennzeichnet, daß man Verbindungen der Formel (I) gemäß Anspruch 1 oder 6 auf die Schädlinge, vorzugsweise Insekten und Nematoden oder ihren Lebensraum einwirken läßt.

10. Verfahren zur Herstellung von Schädlingsbekämpfungsmitteln, dadurch gekennzeichnet, daß man Verbindungen der Formel (I) gemäß Anspruch 1 oder 6 mit Streckmitteln und/oder oberflächenaktiven Mitteln vermischt.

Europäisches Patentamt

**EUROPÄISCHER RECHERCHENBERICHT**

0180879

Nummer der Anmeldung

EP 85 11 3660

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,Y | DE-A-2 260 015 (CIBA-GEIGY A.G.)<br>* Seiten 28-34; Ansprüche *<br>--- | 1,6-10 | C 07 F 9/65<br>A 01 N 57/16 |
| Y | FR-A-2 329 674 (BAYER AG)<br>* Seiten 45-48; Ansprüche *<br>----- | 1,6,10 | |
| | | | RECHERCHIERTE SACHGEBIETE (Int. Cl 4) |
| | | | C 07 F 9/00 |

Der vorliegende Recherchenbericht wurde für alle Patentansprüche erstellt

| Recherchenort | Abschlußdatum der Recherche | Prüfer |
|---|---|---|
| DEN HAAG | 30-01-1986 | BESLIER L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82